Europäisches Patentamt

European Patent Office

Office européen des brevets

(11) Veröffentlichungsnummer: **0 425 869 A2**

(12) **EUROPÄISCHE PATENTANMELDUNG**

(21) Anmeldenummer: **90119642.8**

(22) Anmeldetag: **13.10.90**

(51) Int. Cl.⁵: **B21C 35/02**

(30) Priorität: **31.10.89 DE 3936177**

(43) Veröffentlichungstag der Anmeldung:
**08.05.91 Patentblatt 91/19**

(84) Benannte Vertragsstaaten:
**AT BE CH DE ES FR GB IT LI NL**

(71) Anmelder: **SMS Hasenclever GmbH**
**Witzelstrasse 55**
**W-4000 Düsseldorf 1(DE)**

(72) Erfinder: **Haderer, Kurt**

**Frauenhoferweg 2**
**W-4000 Düsseldorf 13(DE)**
Erfinder: **Schall, Franz**
**Forsthausstrasse 32 A**
**W-4047 Dormagen 11(DE)**

(74) Vertreter: **Pollmeier, Felix et al**
**Patentanwälte**
**HEMMERICH-MÜLLER-GROSSE-POLLMEIER--**
**MEY Eduard-Schloemann-Strasse 47**
**W-4000 Düsseldorf 1(DE)**

(54) **Im Auslauf einer Strangpresse angeordnete Fördereinrichtung.**

(57) Die im Auslauf von Strangpressen angeordneten Fördereinrichtungen haben die Aufgabe die ausgepreßten Stränge in Preßrichtung längs abzufördern und sie dann in ihrer ganzen Länge oder in Abschnitten quer zu fördern. Als Längsförderer (2) wird vorzugsweise ein bewährtes, aus paarweise angeordneten, geschlossenen, umlaufenden Ketten mit zwischen diesen angeordneten, von den Ketten getragenen Balken (19,20) bestehendes Balkenband vorgesehen. Eine Verkürzung der Taktzeit für die Übernahme von Strängen bzw. Strangabschnitten vom Längsförderer (2) durch die Förderelemente (13) des Querförderers und der Ausschluß einer Kollisionsgefahr der Balken (19,20) des Längsförderers (2) und der Förderelemente (13) des Querförderers ist die Aufgabe der Erfindung, die dadurch gelöst wird, daß der Längsförderer seiner Länge nach aus zusammenwirkenden Einzelförderern (12) einer Länge gebildet ist, die dem Zwischenraum jeweils benachbarter im Förderbereich des Längsförderers (2) verbleibender Förderelemente (13) des Querförderers entspricht.

Fig. 2

# IM AUSLAUF EINER STRANGPRESSE ANGEORDNETE FÖRDEREINRICHTUNG

Die im Auslauf von Strangpressen angeordneten Fördereinrichtungen haben die Aufgabe die ausgepressten Stränge in Pressrichtung, d.h. Auslaufrichtung längs abzufördern und sie dann in ihrer ganzen Länge oder in Abschnitten quer zu fördern, um den Strängen bzw. Strangabschnitten Zeit zur Abkühlung zu geben und sie gegebenenfalls einer Streckbank sowie Einrichtungen zum Aufteilen auf Handelslängen und Stapelvorrichtungen zuzuführen. Es ist dafür zu sorgen, daß der Strang unter leichtem Zug ausläuft, damit der Strang gradlinig gestreckt gehalten wird, weshalb der Längsförderer im Auslauf mit einer Fördergeschwindigkeit betrieben wird, die etwas größer als die Preßgeschwindigkeit ist. Dadurch erübrigen sich zunächst besondere Ausziehvorrichtungen, bestehend aus einem längs des Auslaufs verfahrbaren Wagen mit Greifern für den Strang. Der bauliche Aufwand dieser Ausziehvorrichtungen kann nicht aufgewogen werden durch eine weniger aufwendige Ausbildung des Längsförderers, sondern es ergibt sich die Notwendigkeit Längsförderer und Ausziehvorrichtung aufeinander abzustimmen. Als Längsförderer werden vorzugsweise sogenannte Balkenbänder vorgesehen, das sind Förderer mit paarweise angeordneten, geschlossenen, umlaufenden Ketten und diese verbindenden Balken, die mit den Ketten in Auslaufrichtung bewegt werden (Zeitschr.f.Metallkunde, Bd.60(1969) Heft 3, S.172 bis 179; Werbeblatt P2/1117, April 1970, Schloemann Aktiengesellschaft; DE-PS 25 56 894). Die Balken bieten den ausgepressten Strängen ausreichende Auflage um Verformungen der Stränge auszuschließen während Schleifspuren an den Strängen von den leicht voreilend bewegten Balken dadurch vermieden werden, daß die Balken selbst oder Auflagen zu den Balken aus entsprechendem Werkstoff bestehen. Als besonders geeignet haben sich Auflagen aus Graphit erwiesen. Die Stützweite der aufliegenden Stränge bestimmt den Abstand der Balken in Auslaufrichtung, der in jedem Falle ausreichend ist, um eine gute Kühlung der ausgelaufenen Stränge zu ermöglichen. Im übrigen muß der Zwischenraum von je zwei benachbarten Balken ausreichen dafür, daß die Förderelemente des Querförderers zwischen die Balken des Längsförderers gebracht und durch senkrechte Relativbewegung die Stränge von den Balken des Längsförderers abgehoben und vom Querförderer übernommen werden können, wozu der Längsförderer für die gesamte Zeit des Einfahrens, der senkrechten Relativbewegung und des Ausfahrens der Förderelemente des Querförderers angehalten werden muß. Ein Anhalten des Längsförderers erübrigt sich, wenn die Förderelemente des Querförderers für die Zeit ihres Eingriffts zwischen die Balken des Längsförderers in Auslaufrichtung mit dem Längsförderer mitlaufen können und nachdem sie den Bereich der Balken wieder verlassen haben durch Federn oder eine Kolben- Zylinder- Einheit wieder in ihre Ausgangsposition zurückgeführt werden (DE-AS 1 300 898). Mit der Rückführung der Förderelemente des Querförderers in ihre Ausgangsstellung muß auch der von den Förderelementen vom Längsförderer abgenommene Strang bzw. Strangabschnitt entgegen der Auslaufrichtung bewegt werden, was wiederum zu Beschädigungen des Strangs oder Strangsabschnitts führen kann. Im übrigen haftet auch dieser Vorrichtung der Nachteil an, daß infolge Dehnung, Durchhang und Spiel über die Länge des Längsförderers sich addierende Abweichungen in der Kettenteilung und damit der Balkenteilung auftreten können, die zur Kollision von Balken des Längsförderers und Förderelementen des Querförderers führen.

Ausgehend von den Fördereinrichtungen, die im Auslauf ein bewährtes "Balkenband", d.h. einen aus paarweise angeordneten, geschlossenen, umlaufenden Ketten mit zwischen diesen angeordneten, von den Ketten getragenen Balken bestehenden Längsförderer vorsehen, ist es Aufgabe der Erfindung, die Taktzeit für die Übernahme von Strängen bzw. Strangabschnitten vom Längsförderer durch die Förderelemente des Querförderers zu verkürzen und Kollisionen der Balken des Längsförderers und der Förderelemente des Querförderers auszuschließen. Diese Aufgabe wird gemäß der Erfindung dadurch gelöst, daß der Längsförderer seiner Länge nach aus zusammenwirkenden Einzelförderern einer Länge gebildet ist, die den Zwischenraum jeweils benachbarter im Förderbereich des Längsförderers verbleibender Förderelemente des Querförderers entspricht. Es ist zwar grundsätzlich bekannt, einen Längsförderer im Auslauf einer Strangpresse seiner Länge nach aus zusammenwirkenden Einzelförderen zu bilden und zwar zum Zweck, die Einzelförderer getrennt mit unterschiedlichen Fördergeschwindigkeiten betreiben zu können (DE-OS 14 52 325); Querförderer mit ihren Förderelementen sind im Bereich dieser Einzelförderer nicht vorgesehen. Durch die Erfindung werden die Vorteile der "Balkenbänden" voll beibehalten; die Förderelemente des Querförderers verbleiben im Förderbereich des Längsförderers, so daß die Zeit eines Ein- und Ausfahrens von Förderelementen in den Förderbereich des Längsförderers entfällt und die Taktzeit der Übernahme sich entsprechend verkürzt und der Längsförderer nur kurzzeitig und nur angehalten zu werden braucht bei der Übernahme besonders empfindlicher Strangprofile oder- Werkstoffe; jegliche Kollisionsgefahr ist ausgeschlossen.

Zweckmässig ist die Ausbildung der Einzelförderer mit je einem Rahmen, in dem zwei je ein Kettenradpaar tragende Wellen gelagert und zwischen den Kettenrädern Stützschienen für die die Balken tragenden Ketten vorgesehen sind. Die Rahmen der Einzelförderer sind gemäß einem weiteren Merkmal der Erfindung jeweils in Gruppen oder sätmlich in Basisrahmen zusammengefaßt und die Einzelförderer sind an der dem Querförderer abgewandten Seite durch Kettentriebe und auf die zu dieser Seite verlängerten Wellen sitzende Kettenräder getrieblich verbunden.

Für den Ausgleich der mit der senkrechten Relativbewegung von Längs- und Querförderer einhergehenden senkrechten Bewegung des Längsförderers oder des Querförderers ist es vorteilhaft, den Längsförderer heb- und senkbar, also senkrecht bewegbar auszugestalten, zumal diese Ausgestaltung sich auch als baulich vorteilhaft herausstellt. Gemäß einem weiteren Merkmal der Erfindung ist daher der Basisrahmen oder sind die mehreren Basisrahmen von Säulen in senkrechter Richtung geführt und mit Hubeinrichtungen versehen gegenüber den in fester Höhe zum Fundament angeordneten Förderelementen des Querförderers heb- und senkbar. Hierzu ist gemäß der Erfindung weiterhin vorgesehen, daß der oder die Basisrahmen über Kniehebel zum Fundament in senkrechter Richtung abgesetzt und die Kniehebel durch ein Gestänge untereinander und mit einem Exzenertrieb verbunden sind.

Wie bereits erwähnt bestimmt sich der Abstand der Balken des Balkenbandes durch die Stützweite, wobei die freie Biegungslänge eines überhängenden Strangstückes immer kleiner als der Abstand zwischen den Balken ist. Durch die erfindungsgemäße Ausbildung des Längsförderers in Einzelförderern verliert aber das überhängende Strangstück mit dem Abtauchen eines Balkens an einem Kettenrad seine Unterstützung, wodurch die überhängende ungestützte Stranglänge auf fast das doppelte Maß des Abstandes zwischen den Balken anwachsen kann. Bei Strängen geringen bzw. wenig biegungssteifen Querschnitts kann dies zu einem Durchhang der Strangspitze in einem Ausmaß führen, daß die Strangspitze an den Förderelementen des Querförderers anstößt. Da eine Verringerung des Balkenabstandes vermieden werden sollte, wird gemäß einem weiteren Merkmal der Erfindung jede Welle zwischen den die Ketten umlenkenden Kettenrädern mit einem oder mehreren mit der Welle verbundenen und umlaufenden Balken bestückt, die im Zusammenwirken mit jeweils einem der von den Ketten getragenen Balken einen die Stränge zusätzlich stützenden Stern bilden, so daß die zwischengeordneten Balken Zwischenstützen für den Strang bilden und so das Maß der freiüberhängenden Stranglänge entsprechend verringern.

Die Zeichnungen zeigen ein Ausführungsbeispiel der Erfindung.

Figur 1 zeigt in Aufsicht eine Gesamtansicht einer Stranpressanlage mit in deren Auslauf angeordnetem Längs- und Querförderer sowie nachgeschalteten Adjustageeinrichtungen.

Figur 2 zeigt den in Figur 1 eingekreisten Ausschnitt der Aufsicht in größerem Maßstab, zu dem die

Figur 3 eine Seitenansicht zeigt.

Figur 4 zeigt in nochmals vergrößertem Maßstab eine Aufsicht entsprechend dem in Figur 2 eingekreisten Ausschnitt, zu dem

Figur 5 einen Ausschnitt in einer Seitenansicht im Schnitt nach der in Figur 4 eingetragenen Schnittlinie V-V zeigt.

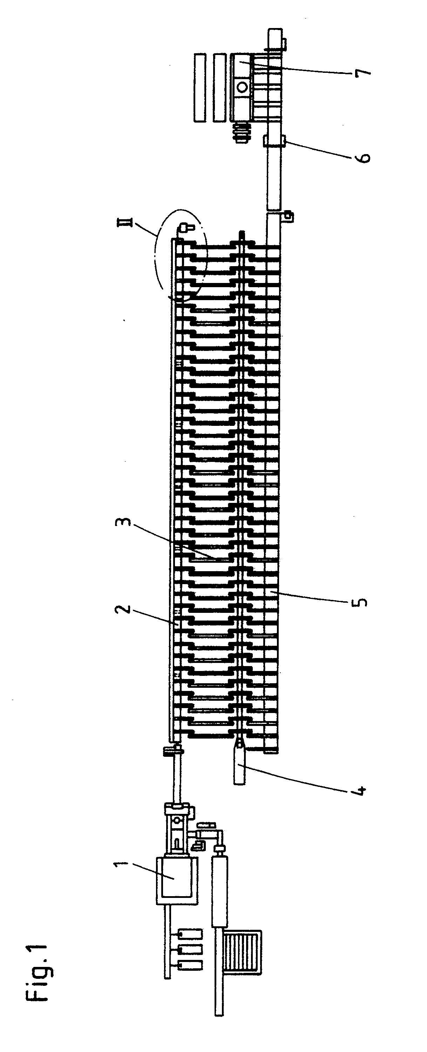

Die in Figur 1 dargestellte Gesamtanlage besteht aus einer Strangpresse 1, in deren Auslauf ein Längsförderer 2 angeordnet ist, in den Förderelemente eines Querförderers 3 eingreifen. Der Querförderer 3 übernimmt die vom Längsförderer 2 aus der Strangpresse 1 ausgezogenen Stränge bzw. Abschnitte dieser Stränge durch senkrechte Relativbewegung von Längsförderer 2 und Querförderer 3. Während des Querförderns finden die Stränge bzw. Strangabschnitte ausreichend Zeit zu der bereits auf dem Längsförderer 2 einsetzenden Abkühlung. Integriert in den Querförderer 3 ist nach dem Ausführunsbeispiel eine Streckbank 4 zum Steckrichten der Stränge bzw. Strangabschnitte. Vom Querförderer 3 werden die Stränge bzw. Strangabschnitte an einen weiteren Längsförderer 5 übergeben, der sie in Gruppen gesammelt einer Säge oder Schere 6 zuführt, die die Stränge in Handelslängen aufteilt und einer Stapeleinrichtung 7 zuführt.

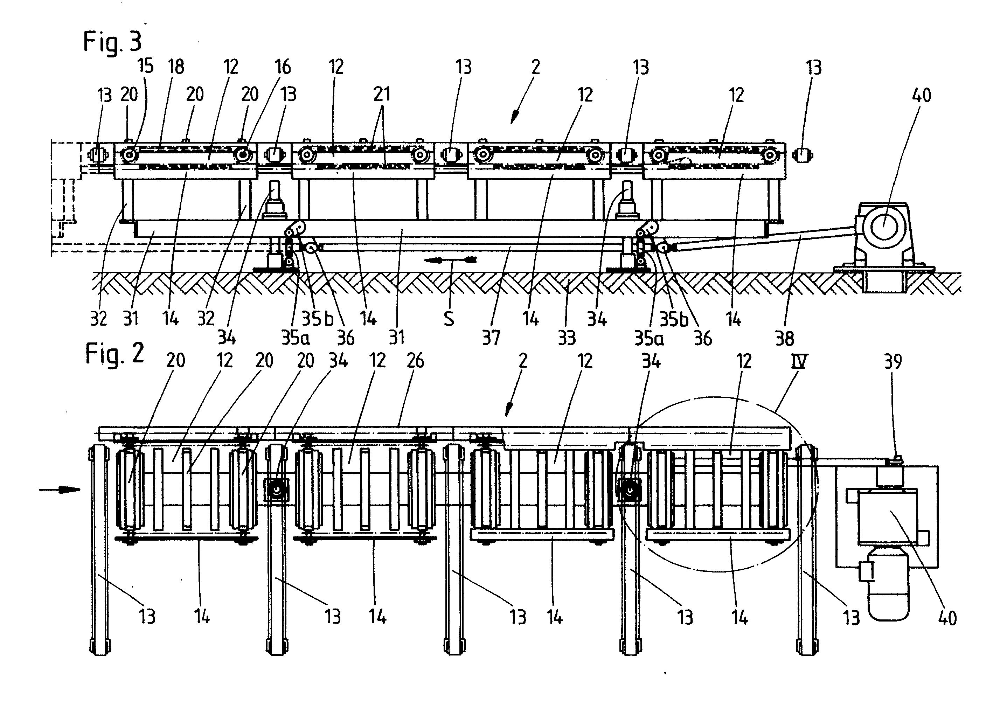

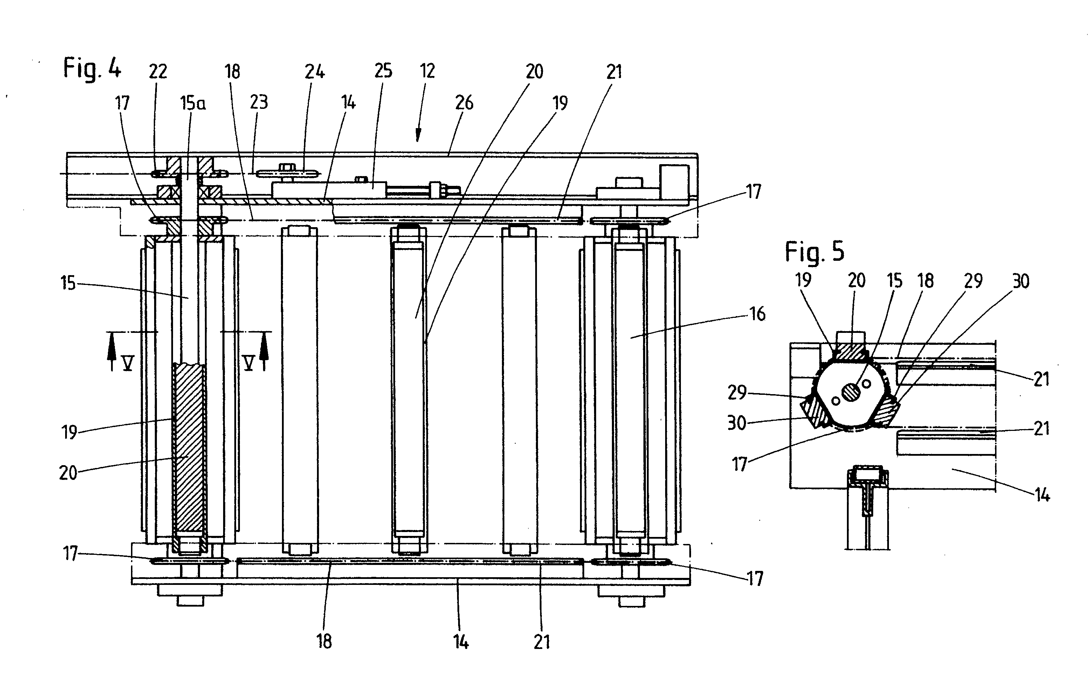

Wie die Figuren 2 und 3 erkennen lassen, besteht der Längsförderer 2 aus einer Mehrzahl zusammenwirkender Einzelförderer 12, von denen jeder eine Länge hat, die die Lücke zwischen Förderelementen 13 zum Querförderer 3 schließt. Jeder Einzelförderer 12 besteht aus einem Rahmen 14, in dem zwei Wellen 15 und 16 gelagert sind, von denen jede ein Paar von Kettenrädern 17 trägt. Zwei geschlossene Ketten 18, die wie die Kettenräder 17 zu Paaren angeordnet sind, werden von je einem Kettenrad 17 auf der Welle 17 und je einem Kettenrad 17 auf der Welle 16 geführt. Diese Paare von Ketten 18 tragen Fassungen 19 für Einsätze 20 geeigneten Werkstoffs, insbesondere Graphit. Zur Stützung der Stränge der Ketten 18 und damit der aus den Fassungen 19 und Einsätzen 20 gebildeten Balken 19/20 sind die Rahmen 14 mit Gleitschienen 21 versehen. Die Welle 15 sind an der den Querförderern 3 abgewandten Seite verlängert und tragen auf ihren aus dem Rahmen 14 herausragenden Wellenzapfen 15 a ein Kettenrad 22. Entlang den Rahmen 14 ist eine geschlossene Kette 23 angeordnet, die mit den Kettenrädern 22 der Einzelförderer 12 in Eingriff steht und diese getrieblich verbindet. Hierzu ist die Kette 23 mit einem nicht dargestellten Antrieb und einem auf deren eines Umlenkrad 24 wirkenden Kettenspanner 25 versehen. Eine Abdeckung 26 für die Kette 23, die Kettenräder 22, den Kettenantrieb, das Umlenkrad 24 und den Kettenspanner 25 erstreckt sich entlang den Einzelförderern 12 und deren Rahmen 14.

Die Förderelemente 13 des Querförderers 3 ragen bis zwichen die Einzelförderer 12, so daß durch senkrechte Relativbewegung zwischen den Förderelementen 13 und den Einzelförderern 12 die auf die Einzelförder 12 aufgelaufenen Stränge bzw. Strangabschnitte von den Fördelementen 13 zum Quertransport auf den Querförderer 3 übernommen werden könne. Hierzu sind die sämtlichen Einzelförderer 12 auf einem Basisrahmen 31 bzw. Gruppen (im Ausführungsbeispiel acht) von (im Ausführungsbeispiel jeweils vier) Einzelförderern 12 auf miteinander verbundenen Basisrahmen 31 mit Stützen 32 befestigt. Auf dem Fundament 33 sind Säulen 34 befestigt, die den bzw. die Basisrahmen 31 in senkrechter Richtung beweglich führen. Die Abstützung eines Basisrahmens erfolgt über Kniehebel 35, deren einer Hebelteil 35 a längenveränderlich ist zur Ausrichtung des Basisrahmens 31 und zur Einstellung der von den Oberkanten der Balken 19/20 gebildeten Förderebene des Längsförderes 2 zur Förderebene der Förderelemente 13 des Querförderers 3. Der andere Hebelteil 35 b ist verbunden mit einem Hebel 36. Die Hebel 36 sind über ein Gestänge 37 miteinander und über ein weiteres Gestänge 38 mit einem Exzenter 39 eines Antriebes 40 verbunden. Durch Verschiebung des Gestänges 37 in Richtung des Pfeils S senkt sich der Basisrahmen 31 ab, so daß die auf den Balken 19/20 liegenden Stränge bzw. Strangabschnitte von den Förderelementen 13 übernommen und quergefördert werden. Sobald die Stränge bzw. Strangabschnitte den Bereich des Längsförderers verlassen haben, wird das Gestänge 37 entgegengesetzt zur Richtung des Pfeils S bewegt, so daß die von den Balken 19/20 gebildete Förderebene über die der Förderelemente 13 gelangt und der Längsförderer 2 zur Aufnahme eines weiteren Stranges bzw. Strangabschnitts verfügbar ist.

Am Übergang von einem zum anderen Einzelförderer 12, in dem sich jeweils ein Förderelement 13 des Querförderers 3 befindet, wird der Regelabstand der Balken 19/20 längs den Paaren von Ketten 18 dadurch überschritten, daß durch das Abtauchen eines Balkens 19/20 mit den um die Kettenräder 17 einer Welle 15 auflaufenden Ketten 18 diese Balken 19/20 nicht wirksam sind. Damit es in diesen Übergangsbereichen nicht zum Ausstoßen oder Schleifen der Stränge an bzw.auf den Förderelementen 13 des Querförderers kommt und dies ohne den Regelabstand der Balken 19/20 geringer als ansonsten erforderlich wählen zu müssen, sind auf die Wellen 15 und 16 zwischen die Kettenräder 18 Fassungen 29 für Einsätze 30, also Balken 29/30 in gleichmäßiger Verteilung zu den mit den Ketten 18 umlaufenden Balken 19/20 gesetzt und mit den Wellen 15 bzw. 16 verbunden. Anstelle der zwei Balken 29/30 des Ausführungsbeispiels der Figur 5 könnte auch eine Trommel entsprechenden Außendurchmessers mit einem Ausschnitt für die mit den Ketten 18 umlaufenden Balken 19/20 vorgesehen werden, jedoch wird der im Ausführungsbeispiel dargestellten Lösung in der Regel aus baulichen Gründen der Vorzug zu geben sein.

**Ansprüche**

1) Im auslauf einer Strangpresse angeordnete Fördereinrichtung, bestehend aus von paarweise angeordneten, geschlossenen, umlaufenden Ketten getragenen, in Auslaufrichtung der Stränge bewegten Balken und einen in diesen Längsförderer eingreifenden durch senkrechte Relativbewegung die Stränge bzw. Strangabschnitte übernehmenden, aus einer Vielzahl parallellaufender Förderelemente gebildeten Querförderer,
dadurch gekennzeichnet,
daß der Längsförderer (2) seiner Länge nach aus zusammenwirkenden Einzelförderern (12) einer Länge gebildet ist, die dem Zwischenraum jeweils benachbarter im Förderbereich des Längsförderers (2) verbleibender Förderelemente (13) des Querförderers (3) entspricht.
2) Fördereinrichtung nach Anspruch 1,
dadurch gekennzeichnet,
daß die Einzelförderer (12) aus einem Rahmen (14) bestehen, in dem zwei je ein Kettenradpaar (17) tragende Wellen (15,16) gelagert und zwischen den Kettenrädern (17) Stützschienen (21) für die Balken (19/20) tragende Ketten (18) vorgesehen sind.
3) Fördereinrichtung nach Anspruch 2,
dadurch gekennzeichnet,
daß die Rahmen (14) jeweils in Gruppen von mehreren oder von sämtlichen Einzelförderern (12) durch einen Basisrahmen (31) zusammengefaßt sind und die Einzelförderer (12) an der dem Querförderer (3) abgewandten Seite durch Kettentriebe (23) und auf die zu dieser Seite verlängerten Wellen (15) sitzende Kettenräder (22) getrieblich verbunden sind.
4) Fördereinrichtung nach Anspruch 3,

dadurch gekennzeichnet,
daß der Basisrahmen (31) oder die mehreren Basisrahmen (31) von Säulen (34) in senkrechter Richtung geführt und mit Hubeinrichtungen (35,36, 37,38,39,40) versehen gegenüber den in fester Höhe zum Fundament (33) angeordneten Förderelementen (13) des Querförderers (3) heb- und senkbar sind.

5) Fördereinrichtung nach Anspruch 4,
dadurch gekennzeichnet,
daß der Basisrahmen (31) oder die mehreren Basisrahmen (31) über Kniehebel (35a,35b) in senkrechter Richtung abgstützt und die Kniehebel (35a, 35b) durch ein Gestänge (37,38) untereinander und mit einem Exzentertrieb (39,40) verbunden sind.

6) Fördereinrichtung nach einem der vorhergehenden Ansprüche,
dadurch gekennzeichnet,
daß jede Welle (15,16) zwischen den die Ketten (18) antreibenden Kettenrädern (17) mit einem oder mehreren mit der Welle (15,16) umlaufenden Balken (29/30) versehen ist und die Balken (29/30) im Zusammenwirken mit jeweils einem der von den Ketten (18) getragenen Balken (19/20) einen die Stränge stützenden Stern bilden.

Fig.1

EP 0 425 869 A2

Fig. 3

Fig. 2

Fig. 4

Fig. 5

EP 0 425 869 A2